# EUROPÄISCHE PATENTSCHRIFT

(11) **EP 0 677 681 B1**
(45) Veröffentlichungstag und Bekanntmachung des Hinweises auf die Patenterteilung: **07.01.1998**
(21) Anmeldenummer: 95250083.3
(22) Anmeldetag: 05.04.1995
(51) Int. Cl.: F16G 13/00, B66C 1/12

(54) **Kettengehänge**
Chain suspensions
Elinguage à chaîne

(30) Priorität: 13.04.1994 DE 4413207
(43) Veröffentlichungstag der Anmeldung: 18.10.1995
(73) Patentinhaber: RUD-KETTENFABRIK RIEGER & DIETZ GMBH U. CO., 73432 Aalen (DE)
(72) Erfinder: Smetz, Reinhard, Dipl.-Ing. (FH), D-86720 Baldingen (DE)
(74) Vertreter: Böning, Manfred, Dr.-Ing.

(56) Entgegenhaltungen:
- WO-A-93/03219
- DE-U- 8 709 825
- DE-U- 9 216 852
- FR-A- 2 314 404
- PATENT ABSTRACTS OF JAPAN vol. 6, no. 188 (P-144) (1066) 28. September 1982 & JP-A-57 100 328 (MITSUBISHI DENKI) 22. Juni 1982

## Beschreibung

Die Erfindung betrifft ein Kettengehänge mit mindestens einer mit einem Anhänger, insbesondere Kennzeichnungsanhänger, versehenen Rundstahlkette.

Die Tragfähigkeit von Kettengehängen der vorstehenen Art hängt gemäß DIN 685, Teil 5, primär einerseits von der Güteklasse der für sie verwendeten Bauteile bzw. Kettenstränge und andererseits von der Art des Einsatzes, z.B. als Ein- oder Mehrstrangausführung bzw. als Kranzkette, ab. Die für die üblichen Anwendungsfälle gültigen Tragfähigkeiten müssen allerdings beim Einsatz der Gehänge im sogenannten "Warmbetrieb" in Abhängigkeit von den auftretenden Temperaturen reduziert werden, wobei beispielsweise bei einem Gehänge der Güteklasse 8 Temperaturen zwischen 200° und 300°C eine Tragfähigkeitsreduzierung auf 90% und Temperaturen über 300° bis 400°C eine Tragfähigkeitsreduzierung auf 75% der normalen Tragfähigkeit erfordern. Diesem die Tragfähigkeit des Gehänges gewissermaßen sekundär beeinflussenden Gebot wird in der Praxis bisher in nur unzureichender Weise Rechnung getragen. Theoretisch hat der Benutzer eines Gehänges zwar die Möglichkeit, die Temperatur der am stärksten einer Hitzebelastung ausgesetzten Kettenglieder eines Kettenstranges beispielsweise mit Hilfe eines Strahlungspyrometers zu ermitteln, in der rauhen Betriebspraxis wird von dieser Möglichkeit indes regelmäßig kein Gebrauch gemacht, da es als unzumutbar erachtet wird, bei jedem Hebevorgang eine Messung vorzunehmen, dies aber an sich nötig wäre, da auch in ähnlich gelagerten Situationen mit unterschiedlichen Temperaturbelastungen der Kettenglieder von Gehängen gerechnet werden muß.

Der Erfindung liegt die Aufgabe zugrunde, ein Kettengehänge der in Betracht gezogenen Art so auszubilden, daß sein Benutzer sich vor Ort ohne zusätzliche Hilfsmittel durch einfache Sichtkontrolle ein Bild über die auf den Kettenstrang des Gehänges einwirkenden Temperaturen machen und insbesondere im Falle einer übermäßigen Erwärmung von Kettengliedern die Überprüfung bzw. Aufarbeitung des Gehänges in die Wege leiten kann. Diese Aufgabe wird erfindungsgemäß dadurch gelöst, daß der Anhänger und/oder mindestens ein Glied des Kettenstranges mit einer Beschichtung versehen ist, die ihre Farbe in Abhängigkeit von der auf sie einwirkenden Temperatur irreversibel ändert.

Das erfindungsgemäße Kettengehänge leistet einen außerordentlich positiven Beitrag zur Erhöhung der Sicherheit beim Einsatz von Gehängen im sogenannten Warmbetrieb, da es nicht nur eine einfache Anpassung der Tragfähigkeitsgrenzen an die jeweiligen Belastungsfälle, sondern insbesondere eine sichere Feststellung der Ablegereife eines thermisch überbelasteten Kettengehänges ermöglicht. Auf einen kurzen Nenner gebracht stellt das erfindungsgemäße Kettengehänge ein Kettengehänge mit integraler Kontrollmöglichkeit seiner thermischen Belastung dar.

Als besonders vorteilhaft erweist es sich, wenn sämtliche Glieder der Rundstahlkette mit einer ihre Färbung in Abhängigkeit von der auf sie einwirkenden Temperatur ändernden Beschichtung versehen sind, wobei die Ausgangs farbe der Beschichtung gleichzeitig zur Kennzeichnung der der jeweiligen Tragfähigkeit entsprechenden Güteklasse genutzt werden kann.

Weitere Einzelheiten und Merkmale der Erfindung ergeben sich aus den Unteransprüchen und der nachstehenden Beschreibung eines in der beigefügten Zeichnung dargestellten Gehänges. Es zeigen:
Fig. 1 die wesentlichen Teile eines paarweise zum Einsatz gelangenden Gehänges zum Aufnehmen eines Gußblockes,
Fig. 2 ein Teilstück des Kettenstranges des Gehänges gemäß Fig. 1,
Fig. 3 in vergrößertem Maßstab den Kennzeichnungsanhänger des Gehänges gemäß Fig. 1 und
Fig. 4 einen Kennzeichnungsanhänger mit einer Farbskala.

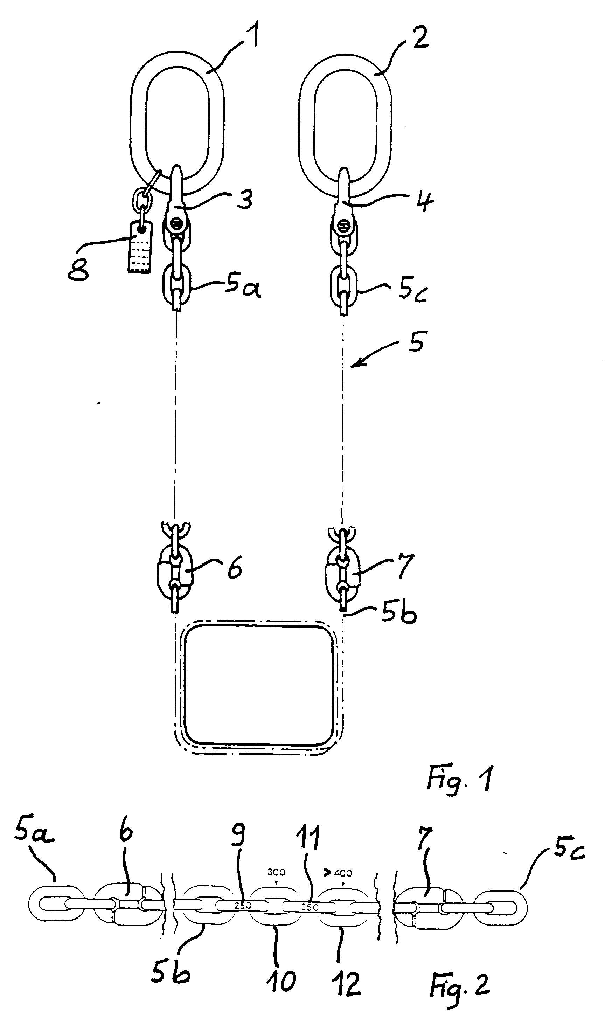

In den Figuren 1 bis 3 ist ein Gehänge dargestellt, das zwei Aufhängeglieder 1 und 2 und eine mit diesen über Ringgabeln 3 und 4 verbundene Rundstahlkette 5 aufweist. Die Rundstahlkette 5 besteht aus drei Abschnitten 5a, 5b und 5c, von denen die Abschnitte 5a und 5b sowie 5b und 5c über jeweils ein Kettenschloß 6 bzw. 7 miteinander verbunden sind.

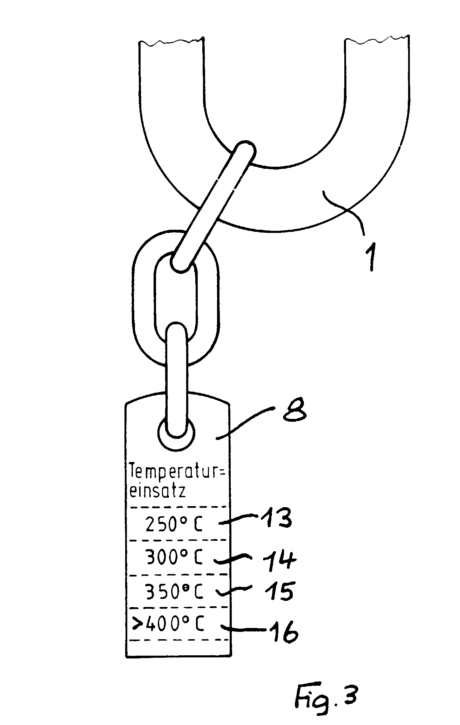

Am Aufhängeglied 1 ist unverlierbar ein Kennzeichnungsanhänger 8 befestigt, der in vergrößertem Maßstab in Figur 3 gezeigt ist.

Wie aus Figur 2 hervorgeht, sind vier Glieder 9,10,11 und 12 des zwischen den Kettenschlössern 6 und 7 angeordneten Abschnittes 5b der Rundstahlkette 5 mit jeweils einer Beschichtung versehen, deren einheitliche Ausgangsfarbe, z.B. weiß, in Abhängigkeit von den in Figur 2 angegebenen Temperaturwerten von 250°, 300°, 350° und 400°C irreversibel in eine andere Endfarbe, z.B. schwarz, übergeht. Dies bedeutet, daß bei einer Temperaturbelastung des Kettenstrangabschnittes 5b in der Größenordnung von z.B. 270°C lediglich ein Farbumschlag des Kettengliedes 9, bei einer Temperaturbelastung 400°C hingegen ein Farbumschlag aller vier Kettenglieder 9,10,11 und 12 erfolgt. Solange nur das Kettenglied 9 seine Färbung ändert, braucht der Benutzer des Gehänges dessen Tragfähigkeit lediglich der jeweiligen Güteklasse entsprechend gemäß DIN 685, Teil 5, prozentual zu reduzieren, wohingegen bei Kettentemperaturen von 400°C und mehr von einer unzulässigen Belastung des Gehänges auszugehen ist und dieses aus dem Verkehr gezogen werden muß, um seine Bauteile gegebenenfalls einer erneuten Wärmebehandlung zu unterziehen.

Auf die Beschichtung der Kettenglieder 9 bis 12 kann verzichtet werden, wenn das Gehänge in seiner Gesamtheit erhöhten Temperaturen ausgesetzt wird. In einem solchen Fall läßt sich die Temperaturbeanspruchung mit Hilfe des Kennzeichnungsanhängers 8 überwachen. Der Kennzeichnungsanhänger 8 weist - wie aus Figur 3 hervorgeht - zu diesem Zweck vier Zonen 13,14,15 und 16 auf, die mit mehreren, auf unterschiedliche Temperaturen ansprechende Beschichtungen versehen sind, welche in gleicher Weise Farbumschlagreaktionen zeigen, wie die Beschichtungen der Kettenglieder 9 bis 12.

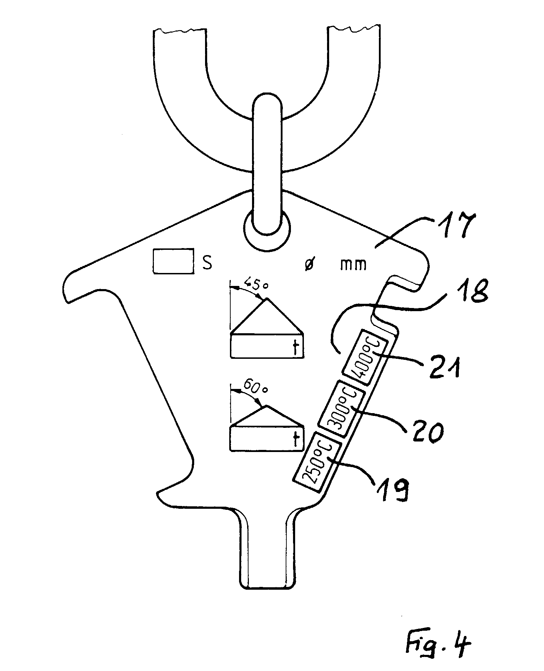

Als besonders zweckmäßig hat sich eine Lösung erwiesen, bei der sämtliche Glieder der Rundstahlkette bzw. Rundstahlketten eines Gehänges auf elektrostatischem Wege mit einer Pulverbeschichtung versehen sind, deren Ausgangsfarbe gleichzeitig zur Kennzeichnung der Güteklasse genutzt werden kann und die ihren Farbton in Abhängigkeit von der auf sie einwirkenden Temperatur gewissermaßen kontinuierlich irreversibel ändert. Entsprechende Pulver sind im Handel erhältlich. Bewährt hat sich ein fluoreszierendes EPO POL PINK-Pulver, das seine Farbe mit steigender Temperatur dergestalt ändert, daß es bei 250°C verblaßt, um anschließend mit steigenden Temperaturen in zunehmend dunklere Brauntöne überzugehen. Zur Überwachung der Temperaturbelastung eines Gehänges der zuletzt genannten Art wird wiederum ein unverlierbar mit dem Gehänge verbundener Kennzeichnungsanhänger 17 genutzt, der, wie in Figur 4 angedeutet, mit einer Farbskala 18 versehen ist, die bestimmten Temperaturen zugeordnete markante Farbtönungen aufweist. Der Benutzer des Gehänges kann sich folglich durch einen Vergleich der Farbe der hitzebelasteten Glieder der Kette mit den Feldern 19,20 und 21 der Farbskala 18 ein Bild über die thermische Beanspruchung der Rundstahlkette des Gehänges machen. Es versteht sich, daß eine Beschichtung der beschriebenen Art auch auf dem Kennzeichnungsanhänger 17 selbst angebracht werden kann, wenn das Gehänge wiederum in seiner Gesamtheit gleichmäßig oder zumindest im wesentlichen gleichmäßig thermisch belastet wird.

## Patentansprüche

1. Kettengehänge mit mindestens einem aus Rundstahlgliedern bestehenden Kettenstrang sowie mit einem Anhänger, insbesondere Kennzeichnungsanhänger, **dadurch gekennzeichnet,** daß der Anhänger (8) und/oder mindestens ein Rundstahlglied (9,10,11, 12) des Kettenstranges (5) mit einer Beschichtung versehen ist, die ihre Farbe in Abhängigkeit von einer von außen auf sie einwirkenden Temperatur irreversibel ändert.

2. Kettengehänge nach Anspruch 1, **dadurch gekennzeichnet,** daß verschiedene bestimmten Temperaturen zugeordnete Zonen (13, 14,15,16) des Anhängers (8) und/oder mehrere bestimmten Temperaturen zugeordnete Glieder (9,10,11,12) der Rundstahlkette (5) mit auf unterschiedlich hohe Temperaturen ansprechenden Beschichtungen gleicher Ausgangsfärbung und gleicher Endfärbung versehen sind.

3. Kettengehänge nach Anspruch 1, **dadurch gekennzeichnet**, daß der Anhänger (17) und/oder mindestens ein Glied der Rundstahlkette (5) mit einer Beschichtung versehen ist, die unter der Einwirkung unterschiedlicher Temperaturen unterschiedliche Farbtöne einer Farbskala (18) annimmt.

4. Kettengehänge nach einem oder mehreren der Ansprüche 1 bis 3, **dadurch gekennzeichnet**, daß der Anhänger (8;17) und/oder die mit einer Beschichtung versehenen Glieder (9,10,11,12) der Rundstahlkette (5) im Lastaufnahmebereich der Rundstahlkette (5) angeordnet sind.

5. Kettengehänge nach einem oder mehreren der Ansprüche 1 bis 3, **dadurch gekennzeichnet,** daß sämtliche Glieder der Rundstahlkette (5) mit einer ihre Färbung in Abhängigkeit von der auf sie einwirkenden Temperatur ändernden Beschichtung versehen sind.

6. Kettengehänge nach Anspruch 4 ode**r 5, dadurch gekennzeichnet,** daß die Beschichtung als Pulverbeschichtung ausgebildet ist.

7. Kettengehänge nach einem oder mehreren der Ansprüche 1 bis 6, **dadurch gekennzeichnet,** daß seine Kette (5) bzw. Ketten aus durch jeweils ein Kettenschloß (6 bzw. 7) miteinander verbundenen Abschnitten (5a,5b,5c) besteht bzw. bestehen, von denen mindestens jeweils einer mit einem Anhänger (8;17) bzw. mit mindestens einem eine Beschichtung aufweisenden Glied (9,10,11,12) versehen ist.

## Claims

1. Chain suspension gear having at least one chain strand consisting of round-steel chains and a tag, particularly a marker tag, characterized therein that the tag (8) and/or at least one round-steel link (9, 10, 11, 12) of the chain strand (5) is provided with a coating which irreversibly changes its color in dependence on the temperature acting on it from the outside.

2. Chain suspension gear as claimed in claim 1, characterized therein that different zones (13, 14, 15, 16) of the tag (8) which are assigned to specific temperatures and/or a plurality of links (9, 10, 11, 12) of the chain strand (5) which are assigned to specific temperatures are provided with coatings of identical initial coloring and identical final coloring which respond to temperatures of different amounts.

3. Chain suspension gear as claimed in claim 1, characterized therein that the tag (17) and/or at least one link of the chain strand (5) is provided with a coating which assumes different color shades of a color scale (18) under the effect of different temperatures.

4. Chain suspension gear as claimed in one or several of claims 1 - 3, characterized therein that the tag (8; 17) and/or the links (9, 10, 11, 12) of the chain strand (5) which are provided with a coating are arranged in the load pick-up region of the chain strand (5).

5. Chain suspension gear as claimed in one or several of claims 1 to 3, characterized therein that all the links of the chain strand (5) are provided with a coating changing its coloring in dependence on the temperature acting on it.

6. The chain suspension gear as claimed in claim 4 or 5, characterized therein that the coating takes the form of a powder coating.

7. Chain suspension gear as claimed in one or several of claims 1 to 6, characterized therein that its chain strand (5) or chains strands consists or consist of segments (5a, 5b, 5c) which are connected to one another by means of respective shackle-type connectors (6 and 7) and at least one of which segments is provided with a tag (8; 17) or with at least one link (9, 10, 11, 12) having a coating.

## Revendications

1. Organe de suspension à chaîne comprenant au moins un cordon de chaîne constitué de maillons en acier rond et également une étiquette, en particulier une étiquette d'identification, caractérisé en ce que l'étiquette (8) et/ou au moins un maillon en acier rond (9, 10, 11, 12) du cordon de chaîne (5) est muni d'un revêtement dont la couleur change de manière irréversible en fonction d'une température agissant de l'extérieur sur celui-ci.

2. Organe de suspension selon la revendication 1, caractérisé en ce que des zones différentes (13, 14, 15, 16) de l'étiquette (8) associées à des températures déterminées et/ou plusieurs maillons (9, 10, 11, 12) de la chaîne (5) en acier rond associés à des températures déterminées sont prévus avec des revêtements répondant à des températures différentes et de même couleur d'origine et de même couleur finale.

3. Organe de suspension selon la revendication 1, caractérisé en ce que l'étiquette (17) et/ou au moins un maillon de la chaîne (5) en acier rond est muni d'un revêtement qui passe par des couleurs différentes d'une échelle de couleur (18) lorsqu'il est soumis à des températures différentes.

4. Organe de suspension selon l'une ou plusieurs des revendications 1 à 3, caractérisé en ce que l'étiquette (8; 17) et/ou le maillon (9, 10, 11, 12) de la chaîne (5) en acier rond muni d'un revêtement est disposé dans la région de réception de charge de la chaîne (5) en acier rond.

5. Organe de suspension selon l'une ou plusieurs des revendications 1 à 3, caractérisé en ce que tous les maillons de la chaîne en acier rond (5) sont munis d'un revêtement dont la couleur change en fonction de la température qui leur est imposée.

6. Organe de suspension selon la revendication 4 ou 5, caractérisé en ce que le revêtement est formé comme un revêtement en poudre.

7. Organe de suspension selon l'une ou plusieurs des revendications 1 à 6, caractérisé en ce que sa chaîne (5) ou ses chaînes est ou sont constituée(s) respectivement de tronçons (5a, 5b, 5c) liés entre eux par un joint de chaîne (6, 7), au moins un de ces tronçons étant muni d'une étiquette (8; 17) ou d'au moins un maillon (9, 10, 11, 12) présentant un revêtement.
